# EUROPÄISCHE PATENTSCHRIFT

(11) **EP 0 297 369 B1**
(45) Veröffentlichungstag und Bekanntmachung des Hinweises auf die Patenterteilung: **02.03.1994**
(21) Anmeldenummer: 88109723.2
(22) Anmeldetag: 18.06.1988
(51) Int. Cl.: C07F 9/38

(54) **Verfahren zur Herstellung von N-Phosphonomethylglycin**
Process for the preparation of N-phosphonomethylglycine
Procédé de préparation de N-phosphonométhylglycine

(30) Priorität: 27.06.1987 DE 3721285
(43) Veröffentlichungstag der Anmeldung: 04.01.1989
(73) Patentinhaber: HOECHST AKTIENGESELLSCHAFT, 65926 Frankfurt am Main (DE)
(72) Erfinder: Müller, Wolf-Dieter, Dr., D-6238 Hofheim am Taunus (DE)

(56) Entgegenhaltungen:
- EP-A- 0 055 695
- EP-A- 0 187 633
- GB-A- 2 154 588
- US-A- 4 442 041

## Beschreibung

Die vorliegende Erfindung betrifft ein neues Verfahren zur Herstellung von N-Phosphonomethylglycin.

N-Phosphonomethylglycin ist unter dem Namen Glyphosate bekannt. Glyphosate und eine Vielzahl dessen Salze sind Herbizide von hoher wirtschaftlicher Bedeutung.

Es wurden bereits eine Vielzahl von Verfahren zur Herstellung von N-Phosphonomethylglycin publiziert. Eine dieser Methoden ist in U.S. Patent 4,442,041 beschrieben. Nach diesem Verfahren wird N-(Diethylphosphonomethyl) iminobisethanol mit konzentriertem wäßrigen Alkalimethallhydroxid in Gegenwart von Cadmium- oder Zinkoxid umgesetzt. Nach Ansäuern wird N-Phosphonomethylglycin in ca. 33 %iger Ausbeute erhalten. Neben der geringen Produktausbeute ist weiterhin nachteilig an diesem Verfahren die Tatsache, daß hohe Reaktionstemperaturen von ca. 270-280°C benötigt werden. Ferner ist in EP-A 0,187,633 die thermische Dealkylierung von N-Alkyl-N-phosphonomethylglycin zu N-Phosphonomethylglycin beschrieben. Auch bei diesem Verfahren sind jedoch hohe Reaktionstemperaturen von 250-350°C erforderlich.

Es wurde nun ausgehend von N-Benzyl-N-phosphonomethylaminoethanol ein kombiniertes Dehydrierungs- und Hydrierungsverfahren zur Herstellung von Glyphosate gefunden, das sich überraschenderweise bei relativ niedrigen Temperaturen durchführen läßt.

Gegenstand der Erfindung ist daher ein Verfahren zur Herstellung von N-Phosphonomethylglycin der Formel I, 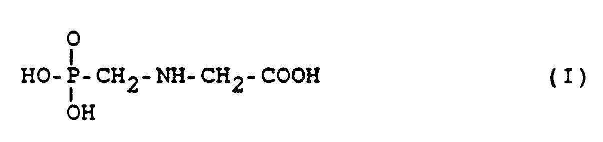
dadurch gekennzeichnet, daß man ein N-Benzyl-N-phosphonomethyl-aminoethanol-Derivat der allgemeinen Formel II oder dessen Salze und Ester 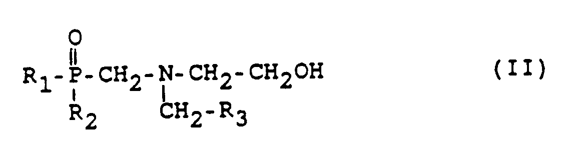
worin
R₁ und R₂ unabhängig voneinander Hydroxy oder eine hydrolysierbare Gruppe wie (C₁-C₆)Alkoxy, (C₃-C₆) Cycloalkoxy, Aryloxy, Aryl(C₁-C₄)alkoxy, Merkapto, (C₁-C₆) Alkylthio, (C₃-C₆)Cycloalkylthio, Arylthio, Aryl-(C₁-C₄) alkylthio, Amino, Mono- oder Di(C₁-C₆)alkylamino, Arylamino oder Aryl(C₁-C₄)alkylamino und R₃ = Aryl bedeuten, in einem abgeschlossenen Reaktionsgefäß in Gegenwart eines Dehydrierkatalysators und eines Hydrierkatalysators mit einem Alkali- oder Erdalkalimetallhydroxid in Wasser umsetzt und nach Beendigung der Reaktion zur Freisetzung von N-Phosphonomethylglycin aus dessen Salz eine Mineralsäure zugibt.

Die in obigen Alkoxy-, Alkylthio- oder Alkylamino-Resten enthaltenen Alkylgruppen können geradkettig oder verzweigt sein. Sie bedeuten beispielsweise Methyl, Ethyl, Propyl, Isopropyl, Butyl oder Hexyl.
Der oben benutzte Begriff Aryl beinhaltet Phenyl oder substituiertes Phenyl, das insbesondere 1 bis 3 Substituenten aus der Gruppe (C₁-C₄)Alkyl, (C₁-C₄)Alkoxy, oder Halogen bevorzugt (C₁-C₄)Alkyl enthält. Beispiele für substituiertes Phenyl sind die Reste Methylphenyl, Butylphenyl, Methoxyphenyl, Butoxyphenyl, Fluorphenyl, Chlorphenyl, Dimethylphenyl, Dichlorphenyl, Methylchlorphenyl, Dimethoxyphenyl, Trimethylphenyl, Ethyldichlorphenyl. Aus wirtschaftlichen Gründen sind für die Reste R₁ und R₂ Hydroxy und (C₁-C₄)Alkoxy, vorzugweise Methoxy oder Ethoxy und für R₃ Phenyl, das durch (C₁-C₄)-Alkyl substituiert sein kann, insbesondere Phenyl, am besten geeignet; doch ist die Natur der Reste R₁, R₂ oder R₃ für die Durchführung des Verfahrens nicht kritisch.

Als Dehydrierkatalysatoren lassen sich die für Dehydrierungsreaktionen an sich bekannten Katalysatoren z.B. Cadmiumoxid, Zinkoxid, Kupfer oder Kupfer-Zirkon-Mischkatalysatoren verwenden, als Hydrierkatalysatoren können die für die Hydrierung an sich bekannten Katalysatoren wie Palladium, Platin, Rhodium, Iridium, Ruthenium, Nickel oder Cobalt eingesetzt werden. Bevorzugt sind Kombinationen von Kupfer oder Kupfer-Zirkon-Mischkatalysatoren mit Palladium, Platin oder Nickel, besonders bevorzugt Kupfer in Kombination mit Palladium oder Platin.

Die Dehydrierung von Aminoalkoholen zu Aminocarbonsäuren und die Hydrogenolyse von Benzylgruppen sind jeweils als solche aus GB-PS 2,148,287 und Org. Reactions Vol. VII, John Wiley & Sons, N.Y. 1953 bekannt.

Überraschend ist jedoch, daß sich die Dehydrierung mit der Hydrierung problemlos verknüpfen läßt. Die Hälfte des bei der Dehydrierung anfallenden Wasserstoffs reagiert demnach in situ am gleichen Molekül weiter, so daß keine Wasserstoffzufuhr notwendig ist. Ebenso ist überraschend, daß die sich bei der alkalischen Reaktionsführung durch Verseifung bildenden Alkohole, Thioalkohole oder Amine die selektive Dehydrierung der Hydroxymethyl-Gruppe der N-Benzyl-Nphosphonomethyl-aminoethanol-Derivate der Formel II nicht beeinträchtigen.

Als Alkali- oder Erdalkalimetallhydroxide werden in dem erfindungsgemäßen Verfahren Lithium-, Natrium-, Kalium- oder Calciumhydroxid eingesetzt. Bevorzugt sind Alkalimetallhydroxide, insbesondere Natriumhydroxid. Das molare Verhältnis von Alkali- oder Erdalkalimetallhydroxid zur Verbindung der Formel II in der Reaktionsmischung sollte größer gleich 3 sein; bevorzugt wird ein molares Verhältnis von 3-4,5:1, insbesondere 3.3:1 bis 3.8:1. Das Alkali- oder Erdalkalimetallhydroxid kann in Substanz zur Reaktionsmischung zugesetzt werden, bevorzugt wird es jedoch im Falle der Alkalimetallhydroxide in Form einer konzentrierten, wässrigen Lösung zugegeben.

Das als Lösungsmittel benutzte Wasser kann direkt oder in Form von Alkalimetallhydroxid-Lösungen zugegeben werden.

Die Reaktion findet in einem weiten Temperaturbereich statt. Die Reaktionstemperatur liegt bevorzugt in einem Bereich von 120°C bis 200°C, insbesondere im Bereich von 160-180°C. Die obere Grenze für die Temperatur wird von der thermischen Stabilität der in der Reaktionsmischung vorliegenden Komponenten bestimmt.

Das Verfahren wird zweckmäßigerweise in einem Autoklaven durchgeführt. In dem Autoklaven baut sich während der Reaktion auch infolge der Bildung von Wasserstoff ein Druck auf, dessen Höhe durch die Dimensionen des Autoklaven, insbesondere vom Verhältnis des Reaktionsvolumens zum Autoklavenvolumen bestimmt wird. Der Druck variiert in der Regel zwischen 1 und 50 bar. Da die Druckobergrenze für die Reaktion nicht kritisch ist, kann auch bei höheren Drucken gearbeitet werden.

Wie oben beschrieben, findet unter den stark alkalischen Reaktionsbedingungen parallel zur gekoppelten Dehydrierung/Hydrierung die Verseifung der Phosphonsäurederivat-Teilstruktur zum Phosphonsäuredialkalimetallsalz statt. Ebensogut kann diese Verseifung partiell oder ganz vor Beginn der gekoppelten Dehydrierung/Hydrierung vorgenommen werden, indem man das N-Benzyl-N-phosphonomethylaminoethanol-Derivat vor Beginn der Reaktion mit der entsprechenden Menge Alkalimetallhydroxid umsetzt.

Die stark alkalischen Reaktionsbedingungen ermöglichen es, daß auch Salze der N-Benzyl-N-phosphonomethyl-aminoethanol-Derivate zur Reaktion eingesetzt werden können. Diese werden unter den alkalischen Reaktionsbedingungen neutralisiert. Beispiele hierfür sind die Hydrochloride und die Methansulfonate. Ebenfalls können eine Vielzahl von am Ethanol-Sauerstoff substituierterter Derivate der Verbindungen der Formel II zur Reaktion eingesetzt werden; Beispiele hierfür sind die O-Alkanoyl, insbesondere Acetyl-Derivate, oder O-Benzoyl-Derivate. Unter den beschriebenen alkalischen Reaktionsbedingungen wird bei diesen Derivaten die Estergruppierung gespalten und somit die Hydroxymethylgruppe in situ zur Dehydrierung freigesetzt. Die oben angegebene Menge an Alkalimetallhydroxid muß in diesen Fällen um 1 Mol Alkalimetallhydroxid pro Mol N-Benzyl-N-phosphonomethyl-aminoethanol-Derivate erhöht werden.

Das Verfahren wird zweckmäßigerweise in einer Inertgasatmosphäre unter Ausschluß von Sauerstoff durchgeführt. Als Schutzgas kann beispielsweise Wasserstoff, Stickstoff oder Argon eingesetzt werden. Es dient zur Verdrängung des ansonsten anwesenden Luftsauerstoffes, der den Ablauf der Reaktion negativ beeinflussen könnte.

Die N-Benzyl-N-phosphonomethyl-aminoethanol-Derivate der Formel II können, wenn R¹, R² ein sauerstoffhaltiger Rest bedeutet, nach den in Zh. Obsch. Khim. 55, 1744 (1985) oder J. Org. Chem. 31, 1603 (1966) beschriebenen Methoden hergestellt werden. Weitere Herstellungsmöglichkeiten der Verbindungen der Formel II sind in Houben Weyl, Bd. XII/1 (1963) beschrieben. An die Reinheit dieser N-Benzyl-N-phosphonomethyl-aminoethanol-Derivate werden keine hohen Anforderungen gestellt; sie können auch als Rohprodukte im erfindungsgemäßen Verfahren eingesetzt werden.

Nachfolgendes Beispiel dient zur Erläuterung der Erfindung.

### Beispiel 1

45,4 g (0,3 mol) 2-Benzylaminoethanol (hergestellt nach U.S. Patent 2,683,744) und 9,85 g (0,315 mol) 96 %igem Paraformaldehyd werden gemischt und bis zum Beginn der exothermen Reaktion erwärmt (ca. 40°C). Nach Abklingen dieser Reaktion wird noch 30 Minuten bei 60°C nachgerührt, anschließend 45 ml Toluol zugesetzt und das Reaktionswasser am Wasserabscheider abdestilliert. Das Wärmebad wird entfernt und zur heißen Lösung 41,4 g (0,3 mol) Diethylphosphit zugetropft; anschließend wird 6 Stunden bei 90°C gerührt, dann das Lösungsmittel abdestilliert.

Das so dargestellte rohe N-Benzyl-N-(bisethoxyphosphonomethyl)aminoethanol, 132 g (1,1 mol) 33 %ige wässrige Natronlauge und 42 g Wasser werden bis zur Bildung einer homogenen Lösung gerührt. Das Reaktionsgemisch wird zusammen mit 20 g Raney-Kupfer (Feuchtgewicht) und 4 g Palladiumoxid-Katalysator (10 Gew.-% Palladium auf Aktivkohle) in einen 500 ml Autoklaven gefüllt, mit Wasserstoff überlagert und 2 Stunden auf 170°C erhitzt. Nach Abkühlen und Entspannen des Autoklaven wird von den Katalysatoren abfiltriert. Es werden 300 ml Toluol zugegeben und das Wasser am Wasserabscheider abdestilliert, anschließend wird das Toluol abdestilliert.

Der Rückstand wird mit 400 ml auf 0°C gekühlter konzentrierter Salzsäure versetzt, das ausgefallene Natriumchlorid abfiltriert und eingedampft. Der Rückstand wird in 300 ml siedendem Wasser mit 6 g Aktivkohle behandelt, heiß filtriert und das Filtrat auf ca. 50 ml eingeengt. Das auskristallisierte N-Phosphonomethylglycin wird abfiltriert und getrocknet. Es werden 38 g ( 75 % der Theorie, bezogen auf 2-Benzylaminoethanol) N-Phosphonomethylglycin mit einer Reinheit von > 99 % erhalten.

## Patentansprüche

1. Verfahren zur Herstellung von N-Phosphonomethylglycin der Formel I, 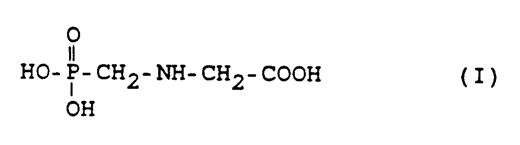 dadurch gekennzeichnet, daß man eine Verbindung der Formel II oder deren Salz oder Ester 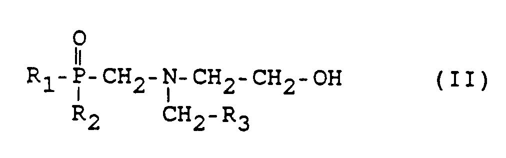 worin
R₁ und R₂ unabhängig voneinander Hydroxy oder einen hydrolysierbaren Rest aus der Gruppe (C₁-C₆)Alkoxy, (C₃-C₆)Cycloalkoxy, Aryloxy, Aryl(C₁-C₄)alkoxy, Mercapto, (C₁-C₆)Alkylthio, (C₃-C₆)Cycloalkylthio, Arylthio, Aryl(C₁-C₄)alkylthio, Amino, Mono- oder Di-(C₁-C₆)alkylamino, Arylamino oder Aryl(C₁-C₄) alkylamino und
R₃ Phenyl oder substituiertes Phenyl bedeuten,
in einem abgeschlossenen Reaktionsgefäß in Gegenwart eines Dehydrier- und Hydrier-Katalysators mit einem Alkali- oder Erdalkalihydroxid in Wasser umsetzt und anschließend eine Mineralsäure zufügt.

2. Verfahren nach Anspruch 1, dadurch gekennzeichnet, daß R₁, R₂ = Hydroxy oder (C₁-C₄)Alkoxy und R₃ = Phenyl, das durch (C₁-C₄)Alkyl substituiert sein kann, bedeuten.

3. Verfahren gemäß Anspruch 1 oder 2, dadurch gekennzeichnet, daß man Alkalimetallhydroxid einsetzt.

4. Verfahren gemäß Anspruch 1, 2 oder 3, dadurch gekennzeichnet, daß man es bei Temperaturen zwischen 120°C und 200°C durchführt.

5. Verfahren nach einem oder mehreren der Ansprüche 1 bis 4, dadurch gekennzeichnet, daß man es bei Temperaturen zwischen 160°C und 180°C durchführt.

6. Verfahren nach einem oder mehreren der Ansprüche 1 bis 5, dadurch gekennzeichnet, daß man als DehydrierKatalysator Cadmiumoxid, Zinkoxid, Kupfer oder einen Kupfer/Zirkon-Mischkatalysator einsetzt.

7. Verfahren nach einem oder mehreren der Ansprüche 1 bis 6, dadurch gekennzeichnet, daß man als Hydrierkatalysator Palladium, Platin oder Nickel einsetzt.

8. Verfahren nach einem oder mehreren der Ansprüche 1 bis 7, dadurch gekennzeichnet, daß man eine Kombination von Kupfer mit Palladium oder Platin als Katalysatoren einsetzt.

9. Verfahren gemäß einem oder mehreren der Ansprüche 1 bis 8, dadurch gekennzeichnet, daß das Molverhältnis Alkali- oder Erdalkalihydroxid zur Verbindung der Formel II größer gleich 3 ist.

10. Verfahren gemäß einem oder mehreren der Ansprüche 1 bis 9, dadurch gekennzeichnet, daß man es in einem Autoklaven unter Inertgasatmosphäre durchführt.

## Claims

1. A process for the preparation of N-phosphonomethylglycine of the formula I 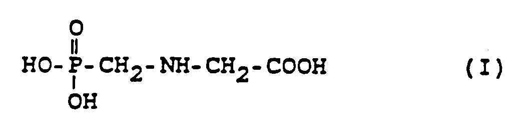 which comprises reacting a compound of the formula II or a salt or ester thereof 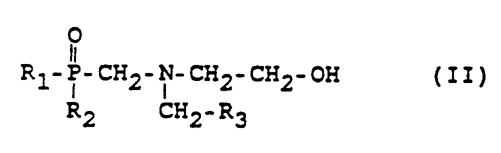 in which
R₁ and R₂ independently of one another denote hydroxyl or a hydrolysable radical from the group comprising (C₁-C₆) alkoxy, (C₃-C₆)cycloalkoxy, aryloxy, aryl(C₁-C₄) alkoxy, mercapto, (C₁-C₆)alkylthio, (C₃-C₆)cycloalkylthio, arylthio, aryl(C₁-C₄) alkylthio, amino, mono- or di-(C₁-C₆)alkylamino, arylamino and aryl(C₁-C₄)alkylamino and
R₃ denotes phenyl or substituted phenyl
in a closed reaction vessel in the presence of a dehydrogenation and hydrogenation catalyst with an alkali metal hydroxide or alkaline earth metal hydroxide in water and subsequently adding a mineral acid.

2. The process as claimed in claim 1, wherein R₁ and R₂ denote hydroxyl or (C₁-C₄)alkoxy and R₃ denotes phenyl, which can be substituted by (C₁-C₄)alkyl.

3. The process as claimed in claim 1 or 2, which comprises using an alkali metal hydroxide.

4. The process as claimed in claim 1, 2 or 3, which is carried out at temperatures between 120°C and 200°C.

5. The process as claimed in one or more of claims 1 to 4, which is carried out at temperatures between 160°C and 180°C.

6. The process as claimed in one or more of claims 1 to 5, wherein cadmium oxide, zinc oxide, copper or a copper/zirconium mixed catalyst is used as the dehydrogenation catalyst.

7. The process as claimed in one or more of claims 1 to 6, wherein palladium, platinum or nickel is used as the hydrogenation catalyst.

8. The process as claimed in one or more of claims 1 to 7, wherein a combination of copper with palladium or platinum is used as the catalysts.

9. The process as claimed in one or more of claims 1 to 8, wherein the molar ratio of alkali metal hydroxide or alkaline earth metal hydroxide to the compound of the formula II is greater than or equal to 3.

10. The process as claimed in one or more of claims 1 to 9, which is carried out under an inert gas atmosphere in an autoclave.

## Revendications

1. Procédé pour préparer la N-phosphono méthylglycine de formule I, 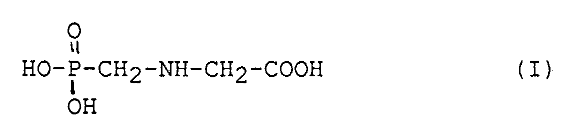 procédé caractérisé en ce qu'on fait réagir un composé de formule II (ou son sel ou ester) 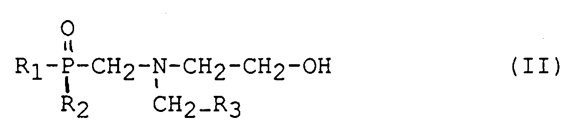 formule dans laquelle
R₁ et R₂ représentent chacun, indépendamment l'un de l'autre, un reste hydroxy ou un reste hydrolysable choisi dans l'ensemble formé par un groupe alcoxy en C₁ à C₆, cycloalcoxy en C₃ à C₆, aryloxy, aryl-alcoxy (en C₁ à C₄), mercapto, alkylthio (en C₁ à C₆), cycloalkylthio (en C₃ à C₆), arylthio, aryl-alkylthio (en C₁ à C₄) amino, mono alkylanino ou dialkylamino (dans chaque groupe alkyl est en en C₁ à C₆), arylamino ou aryl-alkyl(en C₁à C₄)-amino, et
R₃ représente un groupe phényle ou phényle substitué,
dans un réacteur clos, en opérant en présence d'un catalyseur de déhydrogénation et d'hydrogénation avec un hydroxyde alcalin ou alcalino terreux dans de l'eau, et l'on introduit ensuite un acide minéral.

2. Procédé selon la revendication 1, caractérisé en ce que R₁ et R₂ représentent chacun un reste hydroxyle ou alcoxy (en C₁ à C₄) et R₃ représente un reste phényle, qui peut être substitué par un ou des groupes alkyles (en C₁ à C₄).

3. Procédé selon la revendication 1 ou 2, caractérisé en ce que l'on utilise un hydroxyde de métal alcalin.

4. Procédé selon la revendication 1, 2, ou 3, caractérisé en ce qu'on conduit la réaction à des températures comprises entre 120°C et 200°C.

5. Procédé selon une ou plusieurs des revendications 1 à 4, caractérisé en ce qu'on conduit la réaction à des températures comprises entre 160°C et 180°C.

6. Procédé selon une ou plusieurs des revendications 1 à 5, caractérisé en ce qu'on utilise comme catalyseur de déshydrogénation de l'oxyde de cadmium, de l'oxyde de zinc, du cuivre ou un catalyseur mixte cuivre/zirconium.

7. Procédé selon une ou plusieurs des revendications 1 à 6, caractérisé en ce qu'on utilise comme catalyseur d'hydrogénation du palladium, du platine ou du nickel.

8. Procédé selon une ou plusieurs des revendications 1 à 7, caractérisé en ce qu'on utilise comme catalyseur(s) une combinaison de cuivre avec du palladium ou du platine.

9. Procédé selon une ou plusieurs des revendications 1 à 8, caractérisé en ce que le ràpport molaire entre l'hydroxyde de métal alcalin ou alcalino terreux et le composé de formule II est supérieur ou égal à 3.

10. Procédé selon une ou plusieurs des revendications 1 à 9, caractérisé en ce qu'on opère dans un autoclave en atmosphère de gaz inerte.
